# EUROPEAN PATENT APPLICATION

(11) **EP 3 343 470 A1**
(43) Date of publication of application: **04.07.2018**
(21) Application number: 17208835.3
(22) Date of filing: 20.12.2017
(51) Int. Cl.: G06Q 10/00, G06Q 10/10, G06Q 50/04

(54) **MAINTENANCE MANAGEMENT DEVICE, MAINTENANCE MANAGEMENT METHOD, MAINTENANCE MANAGEMENT PROGRAM, AND NON-TRANSITORY COMPUTER READABLE STORAGE MEDIUM**

(30) Priority: 28.12.2016 JP 2016256040
(71) Applicant: Yokogawa Electric Corporation, Tokyo 180-8750 (JP)
(72) Inventor: YOKOCHI, Yutaka, Tokyo, 180-8750 (JP); SHIBAMURA, Junpei, Tokyo, 180-8750 (JP)
(74) Representative: Henkel, Breuer & Partner

(57) **Abstract**

A maintenance management device includes a vendor information acquirer configured to acquire vendor information of a vendor of a device using identification information for identifying the device, a user information acquirer configured to acquire user information of a user who uses the device, and a work order processor configured to generate a work order of a maintenance operation for the device based on the vendor information acquired by the vendor information acquirer and the user information acquired by the user information acquirer.

## Description

### BACKGROUND

### Technical Fields

The present invention relates to a maintenance management device, a maintenance management method, a maintenance management program, and a non-transitory computer readable storage medium.

Priority is claimed on Japanese Patent Application No. 2016-256040, filed December 28, 2016, the contents of which are incorporated herein by reference.

### Related Art

In plants such as chemical industry plants or the like, a plant that manages and controls a well site of a gas field, an oil field, or the like and the surroundings thereof, a plant that manages and controls hydroelectric power generation, thermal power generation, and nuclear power generation, or the like, a plant that manages and controls environmental power generation such as solar power generation and wind power generation, or the like, a plant that manages and controls water supply and sewerage, a dam, or the like and factories (hereinafter, in a case in which these are collectively referred to, they will be referred to as "plants"), distributed control systems (DCS) have been constructed, and high-level automatic operations have been realized. In a DCS, field devices such as a measuring instrument, an operation device, and the like and a control device controlling these are connected through a communicating means.

In a system or the like of a plant constructed to realize the advanced automatic operation, maintenance of field devices is important for stable operation of a plant. For example, a maintenance operator who maintains field devices performs a periodic maintenance operation for field devices and performs a maintenance operation such as replacement and repair (including cleaning) when trouble such as a malfunction occurs in a field device. Particularly, in recent field devices, when a malfunction or the like occurs, users can be informed of an alarm number indicating the cause of the failure by a self-diagnosis function. The alarm number output from a field device and a countermeasure corresponding to the output alarm number are described in an instruction manual or the like.

When an alarm is output from a field device, first, a maintenance operator ascertains the model of the field device and the alarm number on the site of a plant and records the model and the alarm number in a memo or the like. Subsequently, the maintenance operator searches bookshelves or electronic files for an instruction manual for the recorded model, reads a countermeasure corresponding to the alarm number described therein, and records the countermeasure in a memo or the like. The maintenance operator performs a specific maintenance operation based on the recorded countermeasure. For example, when the countermeasure is replacement of a part of the field device, the maintenance operator ascertains the presence of the part in stock on a shelf or the like in which spare parts are stored, and places a new order for the part when the part is not in stock.

A process control device that converts an instruction manual to an electronic file and displays the instruction manual file on a display for process control is known (for example, see Japanese Unexamined Patent Application Publication No. H6-295236).

However, when the maintenance operator ascertains a field device that outputs the alarm and searches for the instruction manual of the field device to ascertain a countermeasure, there is a possibility of an operation error occurring in operations of ascertaining the model of the field device, checking the instruction manual, and ascertaining the presence of a part in stock. Thus, the efficiency of maintenance operations may deteriorate. Particularly, when a number of field devices are installed in a plant, the number of models of the installed field devices increases, and the number of instruction manuals also increases. Much time and effort are taken to check the instruction manuals. Thus, the efficiency of maintenance operations may deteriorate.

### SUMMARY

A maintenance management device may include a vendor information acquirer configured to acquire vendor information of a vendor of a device using identification information for identifying the device, a user information acquirer configured to acquire user information of a user who uses the device, and a work order processor configured to generate a work order of a maintenance operation for the device based on the vendor information acquired by the vendor information acquirer and the user information acquired by the user information acquirer.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating an example of a software configuration of a maintenance management device according to an embodiment.
FIG. 2 is a diagram illustrating an example of vendor information (alarm information) that the maintenance management device according to the embodiment acquires.
FIG. 3 is a diagram illustrating an example of vendor information (identification information) that the maintenance management device according to the embodiment acquires.
FIG. 4 is a diagram illustrating an example of a method of acquiring the user information that the maintenance management device according to the embodiment acquires.
FIG. 5 is a diagram illustrating an example of user information (a device ledger) that the maintenance management device according to the embodiment acquires.
FIG. 6 is a diagram illustrating an example of user information (stock information) that the maintenance management device according to the embodiment acquires.
FIG. 7 is a block diagram illustrating an example of a hardware configuration of the maintenance management device according to the embodiment.
FIG. 8 is a block diagram illustrating an example of a configuration of the maintenance management device according to the embodiment.
FIG. 9 is a diagram illustrating an example of a merging table including merging information of the vendor information and the user information generated by the maintenance management device according to the embodiment.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a maintenance management device, a maintenance management method, a maintenance management program, and a non-transitory computer readable storage medium capable of improving efficiency of maintenance operations.

Hereinafter, a maintenance management device, a maintenance management method, a maintenance management program, and a non-transitory computer readable storage medium according to an embodiment of the present invention will be described in detail with reference to the drawings.

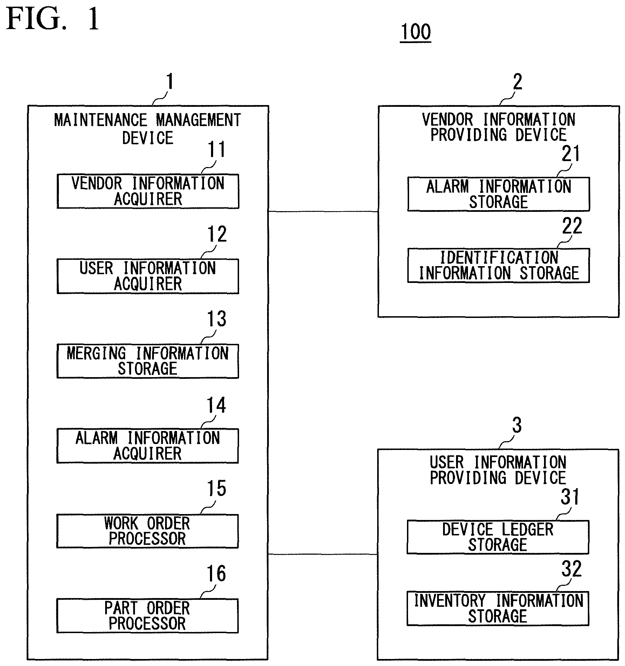

First, a software configuration of a maintenance management device 1 will be described using FIG. 1. FIG. 1 is a block diagram illustrating an example of a software configuration of a maintenance management device according to an embodiment.

In FIG. 1, a maintenance management system 100 includes a maintenance management device 1, a vendor information providing device 2, and a user information providing device 3. The maintenance management device 1 is communicably connected to the vendor information providing device 2 and the user information providing device 3 by cables or wirelessly.

The maintenance management device 1 has respective functions of a vendor information acquirer 11, a user information acquirer 12, a merging information storage 13, an alarm information acquirer 14, a work order processor 15, and a part order processor 16. The vendor information providing device 2 has respective functions of an alarm information storage 21 and an identification information storage 22. The user information providing device 3 has respective functions of a device ledger storage 31 and a stock information storage 32.

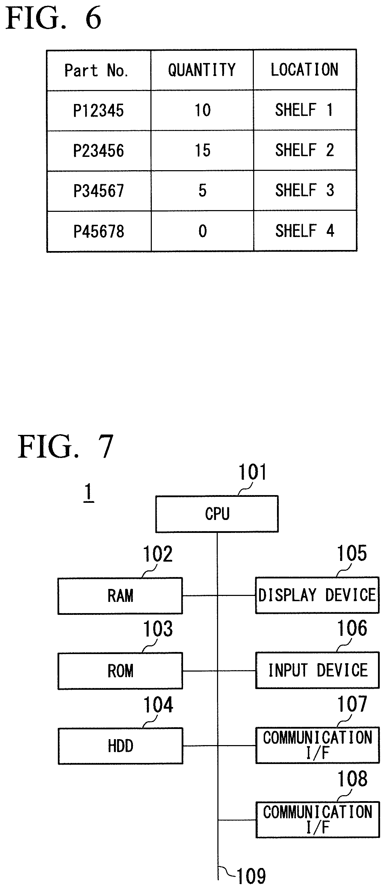

The respective functions of the maintenance management device 1 are functional modules realized by a maintenance management program for controlling the maintenance management device 1. The maintenance management program is provided from a server that provides a program or is provided from a recording medium, for example. The provided maintenance management program is stored in a RAM or the like and is executed by a CPU in a hardware configuration to be described later using FIG. 7.

The respective functions of the vendor information providing device 2 or the user information providing device 3 are functional modules realized by a vendor information providing program or a user information providing program for controlling the vendor information providing device 2 or the user information providing device 3. The vendor information providing program or the user information providing program is executed in a hardware configuration similar to that of the maintenance management device 1. At least one of the functions of the vendor information providing device 2 or the user information providing device 3 may be executed as the function of the maintenance management device 1, for example.

### <Maintenance management device 1 >

The vendor information acquirer 11 acquires vendor information of a vendor of a field device from the vendor information providing device 2 using identification information for identifying the field device. The field device is a sensor, an actuator, or the like which is provided in a plant and has a communication function of performing communication via a cable or wireless network. The sensor measures physical quantity data such as pressure, temperature, pH, and a flow rate of a product in processes of a plant, for example. The actuator is a valve, a pump, or the like. Parts such as sensor elements used in the field device deteriorate with time. A field device having parts which deteriorate with time is subjected to a replacement maintenance operation at predetermined replacement intervals or when an alarm prompting replacement of parts is output from the field device. The replacement maintenance operation is performed by replacing parts in a field device for which it is possible to replace parts alone, and by replacing a whole of a field device (a main body thereof) for a field device for which it is not possible to replace the parts. In the following description, replacement of a field device may include a case in which parts are replaced. The vendor information acquirer 11 acquires alarm information and information necessary for replacement of a field device of which the replacement is prompted in correspondence with the alarm information from the vendor information of the vendor of the field device. The details of the vendor information that the vendor information acquirer 11 acquires will be described later.

The vendor information acquirer 11 acquires the vendor information using identification information for identifying field devices. The identification information for identifying field devices is a serial No. (an identifier) for uniquely identifying an individual field device, for example. The identification information for identifying field devices may be information such as a model of a field device. In the following description, a field device will be described using an identifier as the identification information for identifying the field device.

The identification information may include redundant information indicating that the identification information is proper information, for example. The vendor information acquirer 11 transmits identification information to the vendor information providing device 2 as extensible markup language (XML) data, for example, and acquires vendor information corresponding to the transmitted identification information from the vendor information providing device 2. The vendor information acquirer 11 acquires the vendor information when there is an acquisition instruction from a user, for example. The vendor information acquirer 11 may acquire the vendor information periodically.

The user information acquirer 12 acquires user information of a user who uses the field device from the user information providing device 3. The user who uses the field device is a user who can provide information of a field device that the user uses (owns) and may be a user who operates a plant or the like in which the field device is installed and may be a user who maintains the field device, for example. The user information includes a device ledger of the field device managed by the user and stock information of the field device, for example. The user information may include information on a use state such as an operation time or a replacement history of the field device. The user information acquirer 12 acquires the user information when there is an acquisition instruction from the user. The user information acquirer 12 may acquire the user information periodically. The details of the user information including the use state that the vendor information acquirer 11 acquires will be described later.

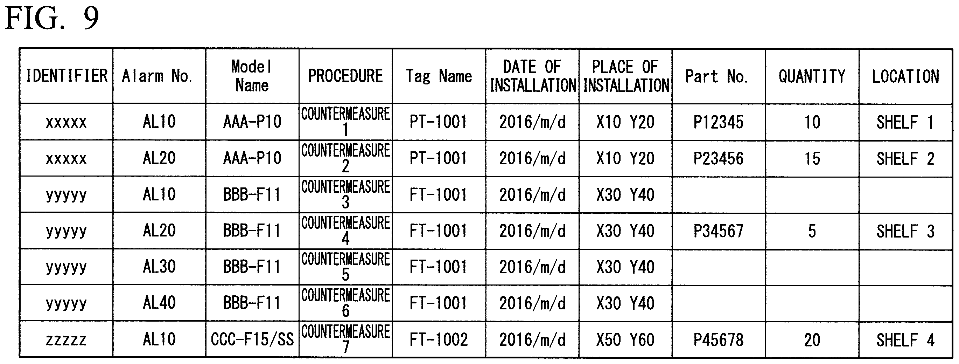

The merging information storage 13 stores merging information created by merging the vendor information acquired from the vendor information providing device 2 and the use state acquired from the user information providing device 3 in a table. Table merging is a process of merging a plurality of items of information expressed by table (tabular) data and is a process of merging items of information present in a plurality of tables retrieved using a predetermined search key into one item of information. The search key is a data item common to a plurality of tables, and in the present embodiment, a case in which the identifier and the alarm information are used as the search key will be described. That is, the merging information storage 13 stores merging information created by merging the vendor information and the user information in a table using the identifier and the alarm information as the search key. The table merging process is executed by the merging information storage 13. The merging information storage 13 stores a new table (a merging table) generated by gathering the merged vendor information. An example of the newly generated merging table will be described with reference to FIG. 9.

The search key can be determined according to a table to be merged, and for example, the model of the field device may be used as the search key. The model of the field device is information that specifies a specification of the field device. It is assumed that field devices of the same model have the same alarm information and the same information necessary for replacement of a field device which is prompted for replacement in correspondence with the alarm information. The merging information storage 13 may store merging information created by merging items of vendor information or merging information created by merging items of user information, for example. The table merging process may be executed by the vendor information acquirer 11 or the user information acquirer 12. The merging information storage 13 may store merging information (link information) of the vendor information only. That is, table merging may refer to logically merging (linking) a plurality of items of table data.

The alarm information acquirer 14 acquires alarm information output from the field device. The alarm information is information indicating the content of an alarm and is an alarm number determined for each field device, for example. The maintenance operator performs a necessary maintenance operation based on the alarm information. For example, when the alarm information is content (an alarm number or the like) that prompts replacement of a specific part used in the field device, the maintenance operator can acquire the alarm number output from the field device using a maintenance device or the like, ascertain the meaning of the alarm number using a manual, and perform replacement of a part specified by the alarm number. The alarm information acquirer 14 automatically collects the alarm information that the maintenance operator acquires using the maintenance device. The alarm information acquirer 14 acquires the alarm information from the field device, an operation control device such as a programmable logic controller (PLC), a maintenance device, and the like. In the present embodiment, a case in which the alarm information that the alarm information acquirer 14 acquires is information determined for each field device model has been described. However, the model of the field device may include a communication method by which the field device can perform communication. For example, depending on a communication method, trouble in communication reserved in advance may be allocated to the alarm number output by the field device. Therefore, the alarm information may include an alarm number common to various types of field devices.

The work order processor 15 generates a work order or provides a work order. The work order is information for instructing execution of a maintenance operation for the field device or the content of the information. The work order is a command for instructing calibration or replacement of the field device, for example. Moreover, the work order may be text information or image information (a work instruction) indicating a procedure of work content to be executed.

### <Generation of work order>

The work order processor 15 generates a work order of a maintenance operation for the field device based on the acquired vendor information and the acquired user information. For example, the work order processor 15 generates the work order based on the model of the field device that outputs an alarm and the output alarm number acquired as the user information, and the model information of the field device, an alarm number of the field device of the model, and a countermeasure corresponding to the alarm number acquired as the vendor information. The model information of the field device, the alarm number of the field device of the model, and the countermeasure corresponding to the alarm number are stored in the merging information storage 13. That is, the work order processor 15 searches the merging information storage 13 from the acquired field device model and the acquired alarm number to specify the countermeasure. In the present embodiment, the work order processor 15 generates a predetermined work order upon acquisition of the alarm information. However, the generation timing and the content of the work order are arbitrary. For example, the work order processor 15 may specify a maintenance operator to whom a work order is provided after the alarm information is acquired and then generate a work order corresponding to a skill of the specified maintenance operator. The work order is text information in which the procedure of maintenance operations is itemized, for example. The work order may be a still image file which represents the procedure of maintenance operations using a still image or a video image file which represents the procedure of maintenance operations using a video.

### <Providing work order>

The work order processor 15 provides the generated work order to the maintenance operator. The work order processor 15 may send the work order to a maintenance device carried by the maintenance operator via an email or the like or may provide the work order so that the maintenance operator can download the work order, for example. Moreover, the work order processor 15 may provide the work order to a maintenance manager who manages the maintenance operation. Moreover, the work order processor 15 may provide the work order to a maintenance management system that records a maintenance history of a field device or manages a maintenance plan of a field device.

The part order processor 16 generates a part order or provides a part order. The part order is information for ordering a part (a replacement part) to be used in a field device or the content of an order.

### <Generation of part order>

The part order processor 16 generates a part order for ordering a part to be used in a field device based on the vendor information acquired from the vendor information providing device 2 and the user information acquired from the user information providing device 3. The vendor information acquired from the vendor information providing device 2 includes the alarm information determined for each field device model and part information of a part to be replaced in correspondence with the alarm information, for example. That is, the part order processor 16 can generate information for ordering a part for which replacement is prompted. The part order processor 16 can refer to information on the number of parts in stock acquired as the user information. The part order processor 16 determines whether the part to be replaced is in stock or the number of parts in stock is equal to or smaller than a predetermined number of the parts in stock and generates a part order when the part is not in stock or the number of parts in stock is equal to or smaller than a predetermined value, for example.

### <Providing part order>

The part order processor 16 provides the generated part order to an ordering system that manages ordering operations. The ordering system is a function operated by a basic business system that manages management resources of an entire corporation, for example. The part order processor 16 can automatically manage the number of parts in stock appropriately by providing the generated part order to the ordering system. Therefore, the maintenance operator or the maintenance manager does not need to check the presence of parts in stock and perform an operation of ordering parts whenever a replacement operation occurs. Thus, it is possible to perform a maintenance management operation efficiently. A method of providing the generated part order is arbitrary. For example, the part order processor 16 may print an order sheet from a printer based on the generated part order. Moreover, the part order processor 16 may display the generated part order on a display (not illustrated) as text information.

### <Vendor information providing device 2>

The vendor information providing device 2 provides vendor information to the maintenance management device 1. The vendor information is information that can be acquired from a vendor that provides a field device, and for example, is alarm information output by a field device or identification information or the like of a field device.

The alarm information storage 21 stores the alarm information determined for each field device model, the countermeasure for the alarm information, and the part information on a part to be replaced in correspondence with the alarm information. The countermeasure for the alarm information is information on the procedure of maintenance operations for which execution is prompted with respect to occurrence of an alarm, for example. Examples of the maintenance operation for which execution is prompted include an operation of inspecting a field device, an operation of checking parameters of a field device, a method of determining the need to replace parts, and a part replacement method. Although the countermeasure is different depending on a field device model and the alarm information, the alarm information storage 21 may store a countermeasure common to a plurality of models and a plurality of items of alarm information.

The identification information storage 22 stores the identification information of a field device and provides the identification information of the field device to a user. Examples of the identification information of the field device include information on an identifier such as a serial No. capable of uniquely identifying a field device and information on a model (a model name) of the field device corresponding to the identifier, for example. The identification information of the field device includes information such as the date of manufacture on which the field device corresponding to the identifier was manufactured and the date of shipping (the date of a user's purchase) on which the field device corresponding to the identifier was shipped. As described above, since the vendor information of a field device is different for each field device model, the user acquires the vendor information from the field device model.

The identification information storage 24 can uniquely specify a field device using an identifier that uniquely identifies the field device as a search key and provide the information on a model or the like of the specified field device as the vendor information, for example. The search key may contain a check key (redundant information) which cannot be known unless a user has the field device in his or her hands. In this way, it is possible to prevent unauthorized acquisition of the vendor information.

### <User information providing device 3>

The user information providing device 3 provides user information to the maintenance management device 1. The user information is information that can be acquired from a user who uses the field device, and for example, is a device ledger of the field device, an inventory ledger of the field device, and the like. The user information may include a use state such as a part replacement history of the field device, an operation history of the field device, or a calibration history of the field device.

The device ledger storage 31 stores a device ledger of the field device. The device ledger of the field device is information that records field devices managed by a user. For example, the device ledger of the field device includes information such as an identifier for uniquely identifying the field device, a tag name assigned to the field device installed in a plant, the date of installation on which the field device was installed in the plant, and the place of installation where the field device is installed in the plant. Information on a field device is added to the device ledger when the maintenance operator installs the field device in the plant, for example, and the information on the field device is removed from the device ledger when the field device is removed from the plant.

The inventory information storage 32 stores inventory information on storage (spare parts) of the field device. The inventory information of the field device is inventory information of the field device body or inventory information of parts used in the field device. In a plant, an appropriate number of spare parts are stored in stock in preparation for a periodic maintenance operation, an unexpected failure, or the like. The inventory information of the field device is information on storage and retrieval in a warehouse, for example. The inventory information of the field device includes information on a model (or a part number) of the field device, the number of parts in stock, and a storage location, for example. The inventory information may include information on a field device which is presently on order.

A case in which the respective functions of the vendor information acquirer 11, the user information acquirer 12, the merging information storage 13, the alarm information acquirer 14, the work order processor 15, and the part order processor 16 of the maintenance management device 1 illustrated in FIG. 1 are realized by software has been described. However, at least one of the respective functions may be realized by hardware. Each of the respective functions may be divided into a plurality of functions and executed. Moreover, two or more of the respective functions may be integrated into one function and executed. Furthermore, at least one of the respective functions of the alarm information storage 21 and the identification information storage 22 of the vendor information providing device 2 or at least one of the respective functions of the device ledger storage 31 and the inventory information storage 32 of the user information providing device 2 may be realized by hardware. FIG. 1 illustrates the maintenance management system 100 having three devices of the maintenance management device 1, the vendor information providing device 2, and the user information providing device 3. However, one or a plurality of functions of the maintenance management device 1, the vendor information providing device 2, or the user information providing device 3 may be realized in other devices. That is, the maintenance management system 100 illustrated in FIG. 1 is one type of the maintenance management device according to the present embodiment, and the configuration of the maintenance management device 1 is not limited to the configuration of the vendor information providing device 2 or the user information providing device 3.

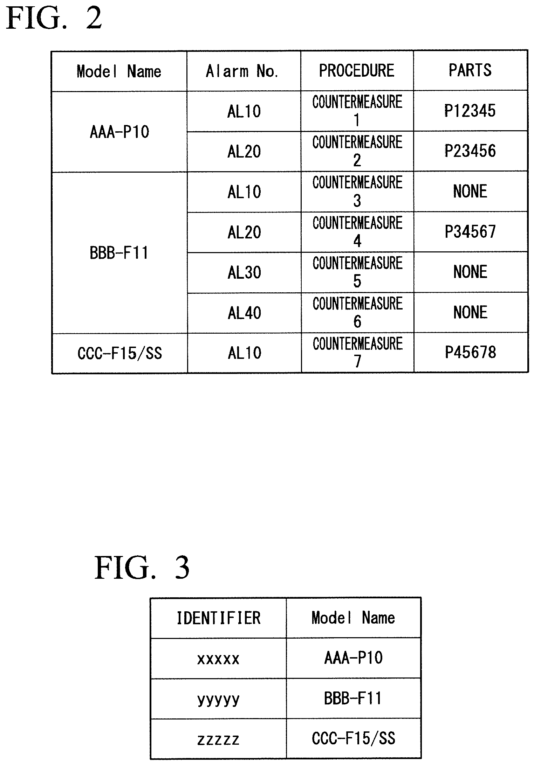

Next, the vendor information that the vendor information acquirer 11 acquires from the vendor information providing device 2 will be described with reference to FIGS. 2 to 3. The vendor information acquirer 11 can acquire the vendor information using the identification information for identifying a field device. The vendor information described in FIGS. 2 and 3 is the same information as described in an instruction manual which is synchronized with the field device or can be downloaded from a website of a vendor, for example. The vendor information acquirer 11 can eliminate the labor of user examining vendor information for each field device or each part from the instruction manual or the like by acquiring the vendor information.

FIG. 2 is a diagram illustrating an example of "alarm information" of the vendor information that the maintenance management device 1 according to the embodiment acquires. The alarm information is stored in the alarm information storage 21 of the vendor information providing device 2.

In FIG. 2, the alarm information has data items of "Model Name," "Alarm No.," "Procedure," and "Part." The data item of "Model Name" indicates the model of the field device. The model of the field device may be a communication method of the field device as described above. The data item of "Alarm No." is the alarm information output from the field device and illustrates an alarm number. The number of alarms to which the alarm number is assigned is different depending on the field device model. The data item of "Procedure" indicates a countermeasure specified by a combination of the information on the model indicated by "Model Name" and the alarm information indicated by "Alarm No." The countermeasure is information indicating the procedure of maintenance operations, for example. The data item of "Part" indicates information on parts used in execution of the procedure indicated by the data item of "Procedure."

For example, a field device of which "Model Name" is "AAA-P10" outputs two types of alarms of which "Alarm No." is "AL10" and "AL20." When the alarm of "AL10" is output, execution of a maintenance operation of which "Procedure" is "Countermeasure 1" is prompted. In the maintenance operation of "Countermeasure 1," a replacement part of which "Part" is "P12345" is used.

A field device of which "Model Name" is "BBB-F11" outputs four types of alarms of which "Alarm No." is "AL10" to "AL40." When the alarm of "AL10" is output, execution of a maintenance operation of which "Procedure" is "Countermeasure 3" is prompted. In the maintenance operation of "Countermeasure 3," "Part" is "None" (that is, it indicates that a replacement part is not necessary).

Here, the alarm number of which "Alarm No." is "AL10" is common to the field devices of "AAA-P10" and "BBB-F11." The alarm number is sometimes expressed by a 4-bit data string, for example, and the same alarm number is sometimes used for different types of field devices. In FIG. 2, as described above, it is assumed that a countermeasure indicated by "Procedure" corresponding to a combination of the model and the alarm number is specified.

Although FIG. 2 illustrates a case in which one part is used for one alarm number (one countermeasure), a plurality of parts may be used for one countermeasure. In this case, it is assumed that ordering of parts is determined for each part depending on the presence of parts in stock and the ordering is executed.

FIG. 3 is a diagram illustrating an example of "Identification Information" of the vendor information that the maintenance management device 1 of the embodiment acquires. The identification information is stored in the identification information storage 22 of the vendor information providing device 2.

In FIG. 3, the identification information has data items of "Identifier" and "Model Name." The data item of "Identifier" is information for uniquely identifying (specifying) a field device and is a serial No., for example. That is, a vendor stores an identifier of a field device and the model of the field device in the identification information in correlation. When the vendor information acquirer 11 searches the identification information using the identifier of the field device as a search key, it is possible to acquire information on "Model Name" of the field device. If the information on "Model Name" is known, it is possible to acquire the alarm information described in FIG. 2 as vendor information using "Model Name" as a search key. In order to cope with the alarm information output from a field device, it is necessary to refer to different countermeasures for respective field devices. In the present embodiment, the maintenance management device 1 can easily acquire information on "Procedure" and "Part" by searching for the vendor information using the identifier of the field device as a search key. Due to this, the user of the field device does not need to examine information on countermeasures for alarms output by individual field devices and maintenance management operations can be performed efficiently.

Although FIG. 2 illustrates a case in which the identification information includes the data items of "Identifier" and "Model Name," the identification information may include data items of "Date of Manufacture," "Date of Shipping," and the like, for example. The "Date of Manufacture" and the like can be referred to for maintenance management of parts which deteriorate with time.

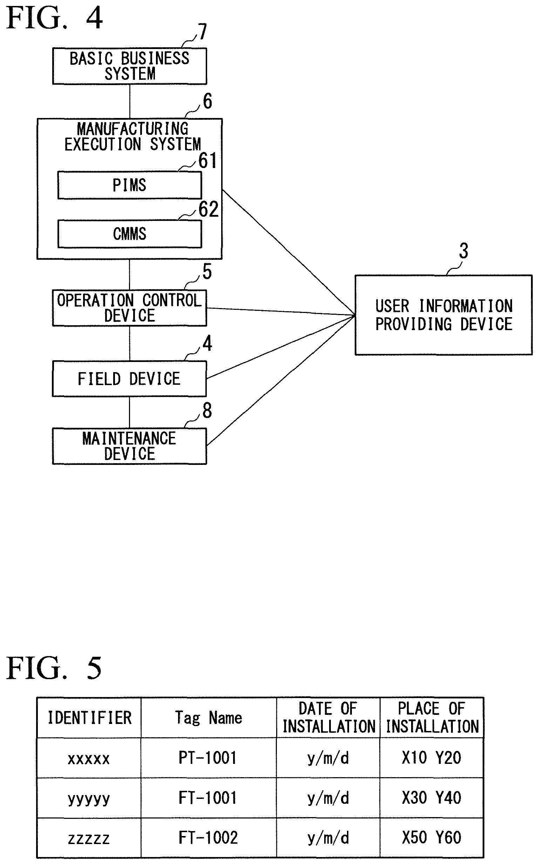

Next, a method of acquiring the user information will be described with reference to FIG. 4. FIG. 4 is a diagram illustrating a method of acquiring the user information that the maintenance management device 1 according to the embodiment acquires.

In FIG. 4, the maintenance management device 1 acquires user information from the user information providing device 3. A field device 4, an operation control device 5, a manufacturing execution system 6, and a basic business system 7 form a control system of a plant. The field device 4, the operation control device 5, the manufacturing execution system 6, and the basic business system 7 are connected by cables or wirelessly. A maintenance device 8 may be connected to the field device 4 by a maintenance operator. The user information providing device 3 acquires user information to be provided to the maintenance management device 1 from one or two or more devices of the field device 4, the operation control device 5, the manufacturing execution system 6, and the maintenance device 8.

The field device 4 is a sensor, an actuator, or the like which is provided in a plant and has a communication function of performing communication with the operation control device 5 via a cable or wireless network. The field device 4 can perform communication corresponding to standards of communication dedicated for industrial meters (sometimes referred to as "field communication") such as ISA100 which is a wireless communication standard of the International Society of Automation (ISA), Highway Addressable Remote Transducer (HART: registered trademark), BRAIN (registered trademark), FOUNDATION Fieldbus, and PROFIBUS. Although FIG. 6 illustrates a case in which one field device 4 is installed, a number of field devices 4 are installed in a plant. The field device 4 can provide information on parameters such as process data of the field device 4 to the user information providing device 3 via field communication as the user information.

The operation control device 5 controls pumps, valves, heaters, and the like (which are not illustrated) based on the process data acquired from the field device 4 to control processes in the plant. The operation control device 5 is a controller such as a programmable logic controller (PLC), for example. The operation control device 5 performs an arithmetic operation using the parameter information acquired from the field device 4 via field communication to control processes. The operation control device 5 may provide information to be used for process control to the user information providing device 3 as the user information.

The manufacturing execution system 6 is a manufacturing execution system (MES) positioned between the basic business system 7 and the operation control device 5, for example, and monitors or manages the information on the field device 4 acquired by the operation control device 5. The manufacturing execution system 6 is a server device or a general-purpose computer such as a desktop PC, for example. The manufacturing execution system 6 may have the functions of a plant information management system (PIMS) 61 or a computerized maintenance management system (CMMS: plant maintenance management system) 62.

The PIMS 61 functions as a plant information management system that collects and records plant state information. In FIG. 6, the PIMS 61 collects and records the information on the field device 4 via the operation control device 5 (or directly and not via the operation control device 5). The PIMS 61 collects time-series information of the field device 4 and records the collected information as history data (historian). The history data includes information on the field device 4 and the date when the information was measured. The PIMS 61 may provide the history data to the user information providing device 3 as the user information. The PIMS 61 may provide data recorded in a device ledger to be described later to the user information providing device 3, for example.

The CMMS 62 functions as a plant maintenance management system that records a maintenance history of field devices or the like in a plant and manages a maintenance plan. The CMMS 62 acquires an operation history of maintenance operations on the field device 4 performed and recorded by the maintenance device 8 from a plurality of maintenance devices 8 and records the operation history as maintenance information, for example. Moreover, the CMMS 62 may allow a maintenance operation performed by a maintenance operator to be manually input and record the maintenance operation as maintenance information. Furthermore, the CMMS 62 acquires inventory information of spare parts of field devices from the basic business system 7 and provides the inventory information to be described later to the user information providing device 3 as user information.

The basic business system 7 is an enterprise resource planning system for process manufacturing industry for managing business resources such as accounting, production management, sales management, and inventory management. The basic business system 7 may use information on an operating state of a plant as management information of business resources. Moreover, the basic business system 7 may include a maintenance management system that manages information on operations related to maintenance and repairing of a plant. The basic business system 7 is a server device or a general-purpose computer such as a desktop PC, for example.

The maintenance device 8 is a device that performs a maintenance operation of the field device 4. The maintenance device 8 is a handheld terminal that performs maintenance items such as periodic inspection of the field device 4, changing of setting information (parameters) set to the field device 4, zero point adjustment, a loop test, and the like, for example. The maintenance device 8 may be a device that automatically records the results of maintenance operations. The maintenance device 8 may provide the maintenance operation results to the user information providing device 3.

As described above, the user information providing device 3 can acquire the user information to be provided to the maintenance management device 1 from the field device 4, the operation control device 5, the manufacturing execution system 6, or the maintenance device 8. The user information providing device 3 provides the acquired information to the maintenance management device 1.

Next, the user information that the user information acquirer 12 acquires from the user information providing device 3 will be described with reference to FIGS. 5 to 6. The user information described in FIGS. 5 to 6 is information that the user uses as maintenance information, and the user information can be acquired from respective controllers of a plant as described with reference to FIG 4.

FIG. 5 is a diagram illustrating an example of a "device ledger" of the user information that the maintenance management device according to the embodiment acquires. The device ledger is stored in the device ledger storage 31 of the user information providing device 3.

In FIG. 5, the device ledger has data items of "Identifier," "Tag Name," "Date of Installation," and "Place of Installation." The data item of "Tag Name" indicates a tag name of the field device. An identifier is information for uniquely specifying a field device whereas the tag name is identification information (ID) for identifying the use of the field device 4. The individual tag names may be set for respective field devices 4 as parameters. Therefore, the same tag name may be set for a field device before replacement and a field device after replacement so that users can understand the field devices are of the same use in a plant. For example, "xxxxx" in "Identifier" is information for uniquely specifying a field device, and "PT-1001" is information indicating a specific use in a plant. Identifier information is used as the search key of the vendor information as described above, and a tag name unique to a plant is not used as the search key.

The data item of "Date of Installation" indicates the date on which the field device 4 was installed in a plant. The date of installation has the same meaning as the date of replacement when the field device was replaced. The data item of "Place of Installation" indicates the place of installation where the field device is installed in the plant. The place of installation can be expressed as the coordinates on a plane (xy) in the plant, for example. A maintenance operator can find a maintenance target field device from the plant using the place of installation and the tag name. Text information like "XX unit of OO device" may be input to the data item of "Place of Installation."

Information on a field device is added to the device ledger when the maintenance operator installs the field device in the plant, and the information on the field device is removed from the device ledger when the field device is detached from the plant, for example. That is, the field device recorded in the device ledger is a field device which is presently installed in a plant, and a maintenance target can be specified by acquiring the user information from the device ledger.

FIG. 6 is a diagram illustrating an example of "inventory information" of the user information that the maintenance management device according to the embodiment acquires. The inventory information is stored in the inventory information storage 32 of the user information providing device 3.

In FIG. 6, the inventory information has data items of "Part No.," "Quantity," and "Location." The data item of "Quantity" is the number of parts in stock of a field device. The data item of "Location" is the location (storage location) of a stock item.

By acquiring information on the number of parts in stock as the user information, it is possible to determine whether a countermeasure including the use of a part corresponding to alarm information can be executed immediately. Moreover, it is possible to make a maintenance plan by adjusting the delivery of a part by placing an order when the part is not in stock. The inventory information may be acquired from a warehouse storage and retrieval system managed by the basic business system 7 illustrated in FIG. 4.

Next, a hardware configuration of the maintenance management device 1 will be described with reference to FIG. 7. FIG. 7 is a block diagram illustrating an example of a hardware configuration of a maintenance management device according to the embodiment.

In FIG. 7, the maintenance management device 1 includes a central processing unit (CPU) 101, a random access memory (RAM) 102, a read only memory (ROM) 103, a hard disk drive (HDD) 104, a display device 105, an input device 106, a communication interface (I/F) 107, a communication I/F 108, and a bus 109 that connects these elements.

The maintenance management device 1 is a server device, a general-purpose computer such as a desktop PC, an FA computer, a device such as PLC, a note- or tablet-type computer, a PDA, or a smartphone, for example. The hardware of the maintenance management device 1 may be configured as a single device and may be a system made up of a combination of a plurality of devices. Moreover, the maintenance management device 1 may share hardware with other devices.

The CPU 101 executes programs stored in the RAM 102, the ROM 103, or the HDD 104 to control the maintenance management device 1. The CPU 101 executes a maintenance management program for realizing the operations of the maintenance management device 1. The maintenance management program is acquired from a recording medium that records the maintenance management program or a server or the like that provides the maintenance management program via a network, for example. The maintenance management program is installed in the HDD 104 and is stored in the RAM 102 so that the program can be read from the CPU 101.

The display device 105 is a liquid crystal display having a displaying function, for example. The display device 105 may be realized in various forms such as a head-mounted display, an eyeglasses-type display, or a wristwatch-type display. The input device 106 is a keyboard or a mouse having an input function, for example. The input device 106 may be a microphone for inputting audio information or a camera or a scanner for inputting image information. The display device 105 and the input device 106 may be realized as a device such as a touch panel having a displaying function and an input function.

The communication I/F 107 controls communication with other devices such as the manufacturing execution system 6 to be described later, the operation control device 5, the maintenance device 8, and the like via cable or wireless communication. The communication I/F 107 controls communication such as transmission and reception of data, voice communication, or transmission and reception of emails with other connected devices. The communication I/F 107 performs communication control corresponding to a general-purpose communication standard such as wireless LAN communication, cable LAN communication, infrared communication, and short-range wireless communication, for example.

The communication I/F 108 controls communication with other devices such as the vendor information providing device 2 and the user information providing device 3 via cable communication or wireless communication. The communication I/F 108 performs communication control corresponding to a field communication standard such as ISA100, HART (registered trademark), BRAIN (registered trademark), FOUNDATION Fieldbus, and PROFIBUS, for example.

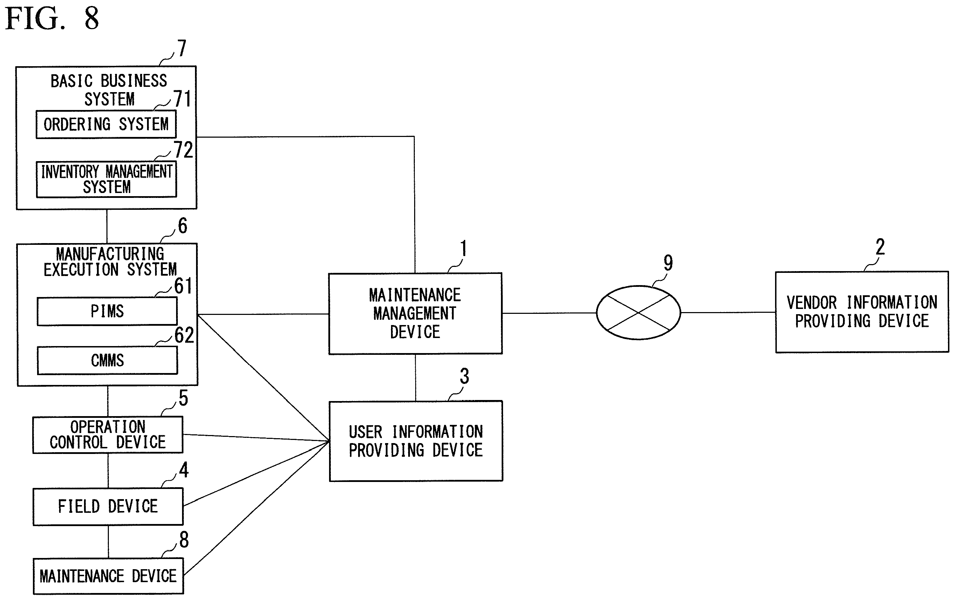

Next, a configuration of the maintenance management system will be described with reference to FIG. 8. FIG. 8 is a block diagram illustrating an example of a configuration of a maintenance management system according to the embodiment.

FIG. 8 is a block diagram illustrating a configuration assuming a case in which the maintenance management device 1 is managed by the user of a field device. The maintenance management device 1 is disposed in respective user sites in a plant. The maintenance management device 1 is communicably connected to the user information providing device 3 in a network environment protected from the outside. Since the maintenance management device 1 is disposed in a network environment protected from the outside, security of the communication between the maintenance management device 1 and the user information providing device 3 is likely to be ensured. Moreover, security of the user information that the maintenance management device 1 acquires is likely to be ensured. The functions of the maintenance management device 1 illustrated in FIG. 8 can be easily realized in the manufacturing execution system 6 similarly to the PIMS 61 or the like, for example.

In FIG. 8, the maintenance management device 1 is communicably connected to the vendor information providing device 2, the user information providing device 3, the manufacturing execution system 6, and the basic business system 7. The basic business system 7 includes an ordering system 71 and an inventory management system 72. The ordering system 71 is a system which manages ordering operations. The inventory management system 72 is a system which manages inventory of the field device 4 and inventory of parts of the field device 4. The maintenance management device 1 provides the work order generated by the work order processor 15 described with reference to FIG. 1 to the CMMS 62 of the manufacturing execution system 6. The CMMS 62 is a system that records the maintenance history of the field device 4 and manages a maintenance plan. The CMMS 62 manually inputs a maintenance operation performed by a maintenance operator or prints a maintenance operation scheduled to be executed on paper. The CMMS 62 can record a maintenance operation scheduled to be executed by acquiring the work order provided from the maintenance management device 1 to provide the maintenance operation to the maintenance operator as work order data and easily record a maintenance history of the maintenance operation performed according to the work order. In this way, it is possible to perform maintenance management efficiently.

Although FIG. 8 illustrates a configuration assuming a case in which the maintenance management device 1 is managed by the user of a field device, the maintenance management device 1 may be managed by a vendor. That is, the maintenance management device 1 may be disposed in an environment in which the maintenance management device 1 can be used by a plurality of users via a network 9. When the maintenance management device 1 is shared by a plurality of users, it is possible to eliminate the costs for respective users installing and managing the maintenance management device 1. When the maintenance management device 1 is shared by a plurality of users, the user information that the maintenance management device 1 acquires from the respective users needs to be managed so that the security of respective users is ensured. That is, it is necessary to ensure security of communication between the user information providing device 3 and the maintenance management device 1 or processing of the user information. Security of the information transmitted and received to and from the maintenance management device 1 via the network 9, such as the alarm information acquired from the field device 4 and the like, is ensured by encryption or the like.

Next, the merging table stored in the merging information storage 13 illustrated in FIG. 1 will be described with reference to FIG. 9. FIG. 9 is a diagram illustrating an example of a merging table including the merging information of the vendor information and the user information generated by the maintenance management device according to the present embodiment. FIG. 9 is a merging table related to parts of a field device.

In FIG. 9, the merging table has data items of "Identifier," "Alarm No.," "Model Name," "Procedure," "Tag Name," "Date of Installation," "Place of Installation," "Part No.," "Quantity," and "Location." FIG. 9 is a merging table in which the acquired vendor information and the user information are merged in a table using "Identifier" and "Alarm No." as a search key. For example, "Model Name," "Procedure," and "Part No." among the data items are based on the vendor information acquired from the vendor information providing device 2. "Tag Name," "Date of Installation," "Place of Installation," "Part No.," "Quantity," and "Location" among the data items are based on the user information acquired from the user information providing device 3. These data items can be searched for using "Identifier" and "Alarm No." as a search key. By storing the merging information created by merging the vendor information and the user information related to parts of a field device necessary for the maintenance operation in the merging table, users do not need to perform individual operations of obtaining the vendor information and the user information. Therefore, it is possible to improve efficiency of the maintenance operation.

As described above, a maintenance management device of the present invention includes a vendor information acquirer that acquires vendor information of a vendor of a device using identification information for identifying the device, a user information acquirer that acquires user information of a user who uses the device, and a work order processor that generates a work order of a maintenance operation for the device based on the acquired vendor information and the acquired user information. Therefore, it is possible to improve the efficiency of the maintenance operation.

The maintenance management device 1 may be a device having the above-described functions and may be realized as a system which is made up of a combination of a plurality of devices and in which respective devices are communicably connected, for example. Moreover, the maintenance management device 1 may be realized as a portion of the functions of other devices.

A maintenance management method of the present embodiment includes a vendor information acquisition step of acquiring vendor information of a vendor of a device using identification information for identifying the device, a user information acquisition step of acquiring user information of a user who uses the device, and a work order processing step of generating a work order of a maintenance operation for the device based on the acquired vendor information and the acquired user information. Therefore, it is possible to improve the efficiency of the maintenance operation.

The execution order of the steps of the maintenance management method of the present embodiment is not limited to the order in which the steps were described but may be executed in an arbitrary order.

Moreover, the various processes of the present embodiment described above may be performed by recording a program for realizing the functions of the devices described in the present embodiment on a computer-readable recording medium and causing a computer system to read and execute the program recorded o the recording medium. Here, "computer system" as used herein may include hardware such as an OS and peripherals. Moreover, the "computer system" may include a homepage providing environment (or a homepage display environment) if it uses a WWW system. Moreover, the "computer-readable recording medium" is a writable nonvolatile memory such as a flexible disk, a magneto-optical disc, a ROM, or a flash memory, a portable medium such as a CD-ROM, or a storage device such as a hard disk included in a computer system.

Furthermore, the "computer-readable recording medium" is one that stores programs for a predetermined period such as a volatile memory (for example, a dynamic random access memory (DRAM)) provided inside a computer system that serves as a server or a client when a program is transmitted via a network such as the Internet and a communication line such as a telephone line. Moreover, the program may be transmitted from a computer system storing the program in a storage device or the like to another computer system through a transmission medium or through transmission waves in a transmission medium. Here, the "transmission medium" that transmits the program is a medium having a function of transmitting information, such as a network (communication network) such as the Internet or a communication line (communication wire) such as a telephone line. Moreover, the program may realize some of the above-described functions. Furthermore, the program may be a so-called differential file (differential program) which can realize the above-described functions in combination with a program that is recorded in advance in a computer system.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A maintenance management device comprising:
a vendor information acquirer configured to acquire vendor information of a vendor of a device using identification information for identifying the device;
a user information acquirer configured to acquire user information of a user who uses the device; and
a work order processor configured to generate a work order of a maintenance operation for the device based on the vendor information acquired by the vendor information acquirer and the user information acquired by the user information acquirer.

2. The maintenance management device according to claim 1,
wherein the vendor information acquirer is configured to acquire, as the vendor information, alarm information to be output from the device corresponding to the identification information and a countermeasure for the alarm information,
wherein the user information acquirer is configured to acquire, as the user information, alarm information output from the device and the identification information of the device which has output the alarm information, and
wherein the work order processor is configured to generate the work order based on the identification information, the alarm information, and the countermeasure.

3. The maintenance management device according to claim 1, further comprising:
a part order processor configured to generate a part order for ordering at least one of a part used in the device and a whole of the device based on the vendor information and the user information.

4. The maintenance management device according to claim 3,
wherein the vendor information acquirer is configured to acquire alarm information to be output from the device corresponding to the identification information and part information of the part to be exchanged to perform a countermeasure for the alarm information,
wherein the user information acquirer is configured to acquire alarm information output from the device and the identification information of the device which has output the alarm information, and
wherein the part order processor is configured to generate the part order based on the identification information, the alarm information, and the part information.

5. The maintenance management device according to claim 3,
wherein the part order processor is configured to provide the part order to an ordering system which manages ordering operations.

6. The maintenance management device according to claim 3,
wherein the user information acquirer is configured to acquire information on a number of the parts in stock, and
wherein the part order processor is configured to generate the part order in accordance with the number of the parts in stock.

7. The maintenance management device according to claim 1,
wherein the user information acquirer is configured to acquire the user information from a maintenance device which is carried by a maintenance operator who performs the maintenance operation for the device and connected to the device communicably.

8. The maintenance management device according to claim 1,
wherein the work order processor is configured to provide the work order to a maintenance management system which records a maintenance history of the device or manages a maintenance plan of the device.

9. The maintenance management device according to claim 2,
wherein the work order processor is configured to specify a maintenance operator to whom the work order is provided after the alarm information is acquired, and generate the work order corresponding to a skill of the specified maintenance operator.

10. The maintenance management device according to claim 1,
wherein the work order processor is configured to generate the work order which is text information in which a procedure of maintenance operations is itemized, a still image file which represents the procedure using a still image, or a video image file which represents the procedure using a video.

11. A maintenance management method comprising:
acquiring, by a vendor information acquirer, vendor information of a vendor of a device using identification information for identifying the device;
acquiring, by a user information acquirer, user information of a user who uses the device; and
generating, by a work order processor, a work order of a maintenance operation for the device based on the vendor information acquired by the vendor information acquirer and the user information acquired by the user information acquirer.

12. The maintenance management method according to claim 11, further comprising:
acquiring, by the vendor information acquirer, as the vendor information, alarm information to be output from the device corresponding to the identification information and a countermeasure for the alarm information;
acquiring, by the user information acquirer, as the user information, alarm information output from the device and the identification information of the device which has output the alarm information; and
generating, by the work order processor, the work order based on the identification information, the alarm information, and the countermeasure.

13. The maintenance management method according to claim 11, further comprising:
generating, by a part order processor, a part order for ordering at least one of a part used in the device and a whole of the device based on the vendor information and the user information.

14. A maintenance management program configured for execution by a computer, the maintenance management program comprising instructions for:
acquiring vendor information of a vendor of a device using identification information for identifying the device;
acquiring user information of a user who uses the device; and
generating a work order of a maintenance operation for the device based on the vendor information and the user information.

15. A non-transitory computer readable storage medium storing one or more maintenance management programs configured for execution by a computer, the one or more maintenance management programs comprising instructions for:
acquiring vendor information of a vendor of a device using identification information for identifying the device;
acquiring user information of a user who uses the device; and
generating a work order of a maintenance operation for the device based on the vendor information and the user information.
